# EUROPÄISCHE PATENTANMELDUNG

(11) **EP 1 312 583 A1**
(43) Veröffentlichungstag der Anmeldung: **21.05.2003**
(21) Anmeldenummer: 02025919.8
(22) Anmeldetag: 20.11.2002
(51) Int. Cl.: C02F 1/76

(54) **Stoffzusammensetzung zur Reinigung von Wasser**

(30) Priorität: 20.11.2001 RU 2001131122
(71) Anmelder: Pawlow, Maxim Walerjewitsch, RF-142190 MO.,g. Troizk (RU)
(72) Erfinder: Pawlow, Maxim Walerjewitsch, RF- 142190MO., Troizk (RU); Safranow, Anatolij Petrowitsch, RF- 143952,MO., Reutow (RU); Marakow, Wladimir Jurjewitsch, RF-103045 Moskau (RU); Makarenkow, Alexandr Dimitrijewitsch, RF-142190 MO.,Troizk (RU); Schimon, Andrej Ernestowitsch, RF - 142190 MO.,Troizk (RU)
(74) Vertreter: Jaap, Reinhard

(57) **Zusammenfassung**

Die vorliegende Erfindung gehört zum Bereich der chemischen Technologie und ermöglicht die Durchführung der Reinigung und der Desinfektion von Wasser. Vorgeschlagen wird eine feste Stoffsammensetzung in Form einer dosierten Verpackung zur Reinigung von Wasser, die Hypochlorit eines Alkalimetalls, Natriumhydroxid und Natriumchlorid enthält, wobei als Hypochlorit des Alkalimetalls Lithiumhypochlorit benutzt wird und die Stoffzusammensetzung zusätzlich Kaliumchlorid enthält, bei folgendem Verhältnis der Komponenten in Massen % :

| | |
|---|---|
| Lithiumhypochlorit | 25 - 35 |
| Natriumhydroxid | 2,5 - 3,5 |
| Natriumchlorid | 60 - 70 |
| Kaliumchlorid | 2 - 5 |

## Beschreibung

Die vorliegende Erfindung gehört in den Bereich der chemischen Technologie und ermöglicht die Durchführung der Reinigung und der Desinfektion von Wasser.

Bekannt ist die Anwendung von 0,5 - 10,0 Massen % einer wässrigen Suspension von Chlorkalk und 1,0 - 2,0 Massen % einer wässrigen Lösung von Calciumhypochlorit
(GOST 1692 - 85, Chlorkalk, Technische Bedingungen, Moskau, Staatliches Komitee der UdSSR für Standards, 1985).
Der Nachteil der bekannten Desinfektionsmittel liegt in der Notwendigkeit der Anwendung großer Dosen von aktivem Chlor in diesen Mitteln, und ebenso in der fehlenden Desinfektionswirkung in Bezug auf Mizellen und Pilzsporen, und bei Calcium- und Natriumhypochlorit in Bezug auf Viren und auf den Erreger des Milzbrandes (Bacillus anthracis)

Bekannt ist eine Desinfektionslösung, die außer Natriumhypochlorit, das durch Elektrolyse einer Lösung aus Natriumchlorid gewonnen wird, noch Natriumhydroxid, Natriumchlorid und Wasser in dem nachfolgend aufgeführten Verhältnis in Massen % enthält:

| | |
|---|---|
| Natriumhypochlorit | 1,0 - 2,0 |
| Natriumhydroxid | 1,0 - 2,0 |
| Natriumchlorid | 5,0 - 10,0 |
| Wasser | der Rest |

(Scheina I.W., Jaroslawskaja L.A., Ioirisch A.N. und andere, Desinfektionsmittel wasserlösliches Calciumhypochlorit, Wissenschaftliche Grundlagen der Desinfektion und Sterilisation, Moskau, 1882, S.14 - 18)

Bekannt ist eine Desinfektionslösung, die Natriumhypochlorit und dieselbe Menge Natriumchlorid, welches durch Chlorieren einer Natriumhydroxidlösung gewonnen wird, und außerdem Natriumhydroxid und Wasser in dem nachfolgend aufgeführten Verhältnis in Massen % enthält:

| | |
|---|---|
| Natriumhypochlorit | 19,0 - 20,0 |
| Natriumhydroxid | 1,0 - 2,0 |
| Natriumchlorid | 5,0 - 10,0 |
| Wasser | der Rest |

(Kubakov W.L. Baschmakow W.W. Elektrochemische Technologie der anorganischen Stoffe, Moskau, Chemie, 1989, S.136).

Bei der Desinfektion werden die oben aufgeführten bekannten Lösungen des Natriumhypochlorits in Wasser bis zu einer Konzentration von 0,1 - 0,4 Massen % des aktiven Chlors verdünnt.

Der Nachteil der bekannten Desinfektionslösungen besteht in deren niedriger desinfizierender Aktivität, was den Einsatz hoher Dosen des aktiven Chlors dieser Lösungen bei der Desinfektion erforderlich macht, sowie im Fehlen einer desinfizierenden Wirkung bei Viren und auch im Versalzen der Räumlichkeiten und der Ausrüstung bei der Durchführung der Desinfektion wegen des hohen Anteils an Natriumchlorid.

Am nächsten in Bezug auf die Zusammensetzung kommt der vorgeschlagenen Lösung eine Desinfektionslösung, die Natriumhypochlorit mit einer Beimischung von Natriumchlorid enthält, welches im Resultat der unmittelbaren Einwirkung von hypochloriger Säure entsteht, die in einem Gemisch aus Tributylphosphat und n-Dodekan gelöst ist, zusammen mit einer wässrigen Natriumhydroxid-Lösung mit folgendem Verhältnis der Komponenten in Massen % :

| | |
|---|---|
| Natriumhypochlorit | 1,0 - 32,5 |
| Natriumhydroxid | 0,1 - 2,2 |
| Natriumchlorid | 0,0005 - 0,5 |
| Wasser | der Rest |

(Gost 11086 - 76, Natriumhypochlorit, Technische Bedingungen; Moskau, Staatliches Komitee der UdSSR für Standards, 1986)

Der Nachteil der bekannten Zusammensetzung besteht darin, dass sie nach zwei Monaten Lagerung bis zu 30 % des aktiven Chlors verliert und es sich außerdem um eine wässrige Lösung mit hohem Transportaufwand handelt.

Das technische Resultat der vorgeschlagenen Lösung ist die Schaffung einer Stoffzusammensetzung für die Desinfektion von Wasser, bei der die aktive Komponente eine bedeutende Zeit erhalten bleibt und bei der auch die Ökonomie bei deren Transport gewährleistet ist.

Die aufgeführten Ergebnisse werden durch eine feste Stoffzusammensetzung in Form einer dosierten Verpackung zur Desinfektion von Wasser erreicht, die Hypochlorit eines Alkalimetalls, Natriumhydroxid und Natriumchlorid enthält, wobei als Hypochlorit des Alkalimetalls Lithiumhypochlorit benutzt wird, und die zusätzlich Kaliumchlorid enthält, bei folgendem Verhältnis der Komponenten in Massen %:

| | |
|---|---|
| Lithiumhypochlorit | 25 - 35 |
| Natriumhydroxid | 2,5 - 3,5 |
| Natriumchlorid | 60 - 70 |
| Kaliumchlorid | 2 - 5 |

Die wirksamen Konzentrationen von Lithiumhypochlorit sind um eine Größenordnung niedriger, als bei den Hypochloriten des Natrium und des Calcium. Die Lösungen des Lithiumhypochlorit können ihren antimikroben Effekt in einem breiten Spektrum der Säurewerte (pH = 3,0 - 9,0) erzielen. Es wurde gezeigt, dass Lösungen von Lithiumhypochlorit bei einer Menge von 0,01- 0,0025 % des aktiven Chlors (0,1 - 4,0 % bei Calciumhypochlorit, 0,1- 0,5 % bei Natriumhypochlorit) in einem Zeitraum von 5 - 30 Minuten aktiv gegenüber den vegetativen Zellen werden. Zur Deaktivierung von Sporen benötigt man Lösungen von Lithiumhypochlorit mit einer Menge von 0,1 - 0,3 % des aktiven Chlors (mehr als 4 % bei Calciumhypochlorit und Natriumhypochlorit), die Bearbeitungszeit beträgt 1 bis 3 Stunden in Abhängigkeit von der konkreten Art der Sporenform des Mikroorganismus.

Das Lithium selbst ist ein wichtiges Mikroelement für den Menschen, deshalb führt dessen Anwendung zur Verbesserung des Zustandes der äußeren Hautschicht des Menschen.
Zu den Vorteilen des Lithiumhypochlorits zählt auch, dass man es, im Gegensatz zu Natriumhypochlorit, als trockenes, streufähiges Produkt mit einer Haltbarkeit von mindestens zwei Jahren herstellen kann.
Lösungen des Lithiumhypochlorits verlieren in zwei Monaten Lagerungszeit ungefähr 2 % des aktiven Chlors, Natriumhypochlorit oder Calciumhypochlorit dagegen ungefähr 30 %.

### Beispiel 1

Verunreinigtes Wasser enthält Bakterien Escheria Coli in der Menge 10³ Mikroorganismen pro Liter. Dem Wasser wird eine Stoffzusammensetzung beigefügt, die Lithiumhypochlorit- 30 Massen %, Natriumhydroxid - 3 Massen %, Natriumchlorid - 62 Massen % und Kaliumchlorid - 5 Massen % enthält. Nach einer Stunde zeigte die Analyse des Wassers, dass die bakterielle Verunreinigung 30 Mikroorganismen pro Liter nicht übersteigt.

### Beispiel 2

Verunreinigtes Wasser enthält Bakterien Escheria Coli in der Menge 10³ Mikroorganismen pro Liter.
Dem Wasser wird eine Stoffzusammensetzung beigefügt, die Lithiumhypochlorit- 25 Massen %, Natriumhydroxid - 2,5 Massen %, Natriumchlorid - 70 Massen % und Kaliumchlorid - 2,5 Massen % enthält. Nach einer Stunde zeigte die Analyse des Wassers, dass keine bakterielle Verunreinigung mehr vorhanden war.

## Patentansprüche

1. Stoffzusammensetzung zur Reinigung von Wasser, die Hypochlorit eines Alkalimetalls, Natriumhydroxid und Natriumchlorid enthält, **gekennzeichnet dadurch, dass** als Hypochlorit des Alkalimetalls Lithiumhypochlorit benutzt wird und die Stoffzusammensetzung zusätzlich Kaliumchlorid enthält, bei folgendem Verhältnis der Komponenten in Massen % :
| | |
|---|---|
| Lithiumhypochlorit | 25 - 35 |
| Natriumhydroxid | 2,5 - 3,5 |
| Natriumchlorid | 60 - 70 |
| Kaliumchlorid | 2 - 5 |

2. Stoffzusammensetzung nach Anspruch 1,
**dadurch gekennzeichnet, dass** die Stoffzusammensetzung in fester Form und in einer dosierten Verpackung besteht.
